# EUROPÄISCHE PATENTSCHRIFT

(11) **EP 1 945 543 B1**
(45) Veröffentlichungstag und Bekanntmachung des Hinweises auf die Patenterteilung: **23.09.2009**
(21) Anmeldenummer: 06818053.8
(22) Anmeldetag: 07.11.2006
(51) Int. Cl.: B65G 57/20, B65G 57/03, G06F 15/00, G06F 17/00, B29D 30/00

(54) **VERFAHREN UND VORRICHTUNG ZUM AUTOMATISIERTEN STAPELN VON REIFEN AUF EINEM TRÄGER**
METHOD AND DEVICE FOR AUTOMATICALLY STACKING TIRES ON A SUPPORT
PROCEDE ET DISPOSITIF D'EMPILAGE AUTOMATIQUE DE PNEUS SUR UN SUPPORT

(30) Priorität: 08.11.2005 DE 102005053296
(43) Veröffentlichungstag der Anmeldung: 23.07.2008
(73) Patentinhaber: KUKA InnoTec GmbH, 86165 Augsburg (DE)
(72) Erfinder: COTTONE, Norbert, 86441 Zusmarshausen (DE); KOTZOR, Daniel, 82229 Seefeld (DE); PEGHINI, Martin, 86154 Augsburg (DE); ALBRECHT, Torsten, 91080 Uttenreuth (DE)
(74) Vertreter: Gagel, Roland
(86) Internationale Anmeldenummer: PCT/DE2006/001950
(87) Internationale Veröffentlichungsnummer: WO 2007/054072

(56) Entgegenhaltungen:
- WO-A-00/26128
- WO-A-20/05100213
- AT-B- 358 993

## Beschreibung

### Technisches Anwendungsgebiet

Die vorliegende Erfindung betrifft ein Verfahren sowie eine Vorrichtung zum automatisierten Stapeln von Reifen auf einem Träger gemäß dem Oberbegrift des Anspruchs II und wie aus der WO 00/26128 A1 bekannt , insbesondere zum Stapeln der Reifen nach einem Rick-Rack Muster oder einem vertikalen Muster in Paletten.

Die Einlagerung von Reifen erfolgt in der Regel auf Paletten, in denen die Reifen möglichst Raum sparend gestapelt werden. Als Stapelmuster haben sich hierbei das Rick-Rack Muster und das vertikale Muster bewährt. Beim Rick-Rack Muster werden die Reifen so gestapelt, dass sie ineinander nesten. Hierdurch wird ein sehr dichtes Stapelmuster erreicht. Beim vertikalen Muster stehen die Reifen auf ihren Laufflächen dicht an dicht nebeneinander in den Paletten. Um die nötige Stabilität zu gewährleisten, werden je Reifenreihe jeweils zwei parallel verlaufende Stangen eingesetzt, auf denen die Reifen stehen.

### Stand der Technik

Das Stapeln der Reifen in die Paletten wird bisher von Hand durchgeführt. Um im Versandlager möglichst viele Reifen unterzubringen, müssen diese so Raum sparend wie möglich in den dafür vorgesehenen Paletten gestapelt werden. Das für unterschiedliche Reifengrößen jeweils optimale Stapelmuster wird vorher manuell ausgetestet.

Für eine platzsparende Stapelung von Reifen auf einer Reifenpalette ist es bspw. aus der DE 89 13 516 U1 bekannt, die Reifen in einem vertikalen Stapelmuster zu stapeln. Bei diesem Stapelmuster stehen die Reifen auf ihren Laufflächen nebeneinander, also vertikal. Die Druckschrift befasst sich hierbei insbesondere mit der Bauform einer Reifenpalette, die eine vertikale Stapelung der Reifen ermöglicht.

Eine weitere Möglichkeit der platzsparenden Stapelung von Reifen bietet das Rick-Rack Stapelmuster, wie es bspw. aus der AT 358 993 bekannt ist. In dieser Druckschrift wird der Aufbau dieses Stapelmusters im Detail beschrieben.

Automatisierte Lösungen werden bisher lediglich für die kurzzeitige Zwischenablage von Reifen angeboten. Hierbei legen mehrachsige Portalsysteme oder Roboter mit entsprechenden Greifwerkzeugen die Reifen nach einfachen Mustern ab. Es handelt sich dabei um horizontale Muster, bei denen die Reifen auf ihren Seitenflächen liegend gestapelt werden. Ein derartiges Verfahren ist aus der WO 00/26128 A1 bekannt. Bei diesem Verfahren werden ankommende Reifen nach Reifengröße sortiert und horizontal auf dem Boden gestapelt. Die einzelnen Stapel werden dann für den Weitertransport auf Paletten verladen und mit einem Transportband abtransportiert. Hierbei werden online Reifendaten der angelieferten Reifen aufgenommen und mit einem Computerprogramm die momentan besten Ablageplätze errechnet. Das Computerprogramm entscheidet dabei jeweils in Abhängigkeit von mehreren Parametern, an welcher Stelle der jeweilige Reifen abgelegt wird, insbesondere, ob dieser Reifen auf einen bereits existierenden Stapel gelegt oder ob mit diesem Reifen ein neuer Stapel begonnen wird. Die Parameter umfassen dabei u.a. die Reifendaten, die momentane Arbeitsbelastung jedes beteiligten Robotermoduls sowie die Gesamtkapazität jedes Robotermoduls. Der Stapelungs- und Sortierprozess wird solange durchgeführt, bis eine ausreichende Anzahl an Stapeln erreicht ist, um eine Palette damit zu beladen. Die Stapel werden dann als Ganzes mit dem dafür ausgebildeten Greifwerkzeug aufgenommen und auf die Palette verladen. Das Computerprogramm ist hierbei auf einen optimalen Durchsatz bei der Verladung der Reifen ausgerichtet. Das zugehörige Greifwerkzeug ist so ausgebildet, dass es sowohl einzelne Reifen als auch vollständige Reifenstapel greifen kann.

Für eine möglichst Raum sparende automatisierte Palettierung von Reifen, für die vor allem das Rick-Rack Muster oder das vertikale Muster in Frage kommen, ist das Verfahren der WO 00/26128 A1 jedoch nicht geeignet.

Weitere Greifwerkzeuge zur Aufnahme und zum Ablegen von Reifen sind beispielsweise aus der EP 1059148 B1, der US 5082519 A oder der GB 2126153 A bekannt. Bei der EP 1059148 B1 wird der Reifen am Innenradius gegriffen, indem rotationssymmetrische Elemente gegen den Wulst gepresst werden und den Reifen somit halten. Mindestens zwei dieser Elemente sind in radialer Richtung des Reifens beweglich ausgeführt. In der US 5082519 A ist ein Greifwerkzeug beschrieben, das auf dem Prinzip eines Parallelgreifers mit zwei gegeneinander beweglichen Greifbacken beruht, die Karkassen von Reifen am Außendurchmesser greifen. Mit diesem Greifwerkzeug werden die Reifenkarkassen innerhalb des Produktionsprozesses umpositioniert. Die GB 2126153 A beschreibt schließlich ein Greifwerkzeug für Rohreifen, die am inneren Wulst mit drei beweglichen Spannbacken gegriffen werden.

Keine der genannten Druckschriften offenbart jedoch ein Verfahren oder eine Vorrichtung, die für ein automatisches Palettieren von Reifen zur Platz sparenden Einlagerung geeignet ist. Die hierzu bisher erfolgte manuelle Stapelung ist jedoch aus gesundheitlichen und wirtschaftlichen Gründen nicht wünschenswert.

Die Aufgabe der vorliegenden Erfindung besteht daher darin, ein Verfahren sowie eine Vorrichtung anzugeben, mit der sich Reifen automatisiert und Platz sparend auf einen Träger aufbringen lassen.

### Darstellung der Erfindung

Die Aufgabe wird mit dem Verfahren und der Vorrichtung gemäß den Patentansprüchen 1 und 11 gelöst. Vorteilhafte Ausgestaltungen des Verfahrens sowie der Vorrichtung sind Gegenstand der Unteransprüche oder lassen sich der nachfolgenden Beschreibung sowie den Ausführungsbeispielen entnehmen.

Bei dem vorliegenden Verfahren zum automatisierten Stapeln von Reifen auf einem Träger werden zunächst Geometriedaten der Reifen und/oder ein digitales Reifenmodell der Reifen bereitgestellt oder erzeugt. Bei diesen Geometriedaten handelt es sich um Daten wie Außendurchmesser, Innendurchmesser und Reifenbreite sowie eventuell die Felgenmaulbreite. Auch ein digitales Reifenmodell der Reifen kann bereitgestellt oder aus den Geometriedaten automatisch erzeugt werden. Umgekehrt können die Geometriedaten auch automatisch aus einem digitalen Reifenmodell abgeleitet werden. Auf Basis der Geometriedaten und/oder des Reifenmodells und einer vorgebbaren Größe des Trägers, in der Regel einer Palette, berechnet ein Programm bzw. Algorithmus ein Rick-Rack Muster und/oder ein vertikales Muster als Stapelmuster für die Reifen auf dem Träger, das eine stabile Lagerung einer möglichst großen Anzahl der Reifen auf dem Träger ermöglicht. In einer besonderen Ausgestaltung kann der Benutzer den Stapelmustertyp vorgeben oder aus der vorgegebenen Auswahl auswählen.

Nach der Offline-Berechnung des Stapelmusters für Reifen der bereitgestellten Geometriedaten oder des bereitgestellten Reifenmodells werden automatisch die Positionsdaten der Reifen aus dem Stapelmuster übernommen sowie zugehörige Bewegungsbahnen einer Handhabungseinrichtung für die Stapelung der Reifen gemäß dem Stapelmuster generiert und abgespeichert. Unter den Positionsdaten sind hierbei Daten des Ortes sowie der Orientierung der Reifen zu verstehen. Vorzugsweise erfolgt die Berechnung der Stapelmuster vorab bereits für mehrere unterschiedliche Reifengrößen bzw. Reifentypen, die später gestapelt werden sollen. Zu jedem Reifentyp werden hierbei die entsprechenden Positionsdaten und Bewegungsbahnen zusammen mit einer Identifikationsinformation des Reifentyps in einer Datenbank abgespeichert. Bei der Stapelung der Reifen werden dann die gespeicherten Positionsdaten und zugehörigen Bewegungsbahnen abgerufen und der Handhabungseinrichtung übergeben, die die Reifen an einer vorgegebenen Aufnahmeposition aufnimmt und entsprechend den Positionsdaten und zugehörigen Bewegungsbahnen auf dem Träger ablegt. Bei Nutzung einer Datenbank mit mehreren Reifentypen werden dabei zunächst die zu stapelnden Reifen identifiziert und anschließend die diesen Reifen zugeordneten Positionsdaten und Bewegungsbahnen anhand der abgespeicherten Identifikationsinformation abgerufen.

Die gleichen Positionsdaten und zugehörigen Bewegungsbahnen können zu einem späteren Zeitpunkt auch wieder genutzt werden, um den Träger bzw. die Palette automatisiert zu entladen. Hierzu müssen die sich aus diesen Daten ergebende Reihenfolge und die Bewegungsbahnen lediglich umgekehrt werden.

Mit dem vorliegenden Verfahren und der zugehörigen Vorrichtung wird somit auf komfortable Art und Weise mit Hilfe eines Rechners ein optimales Stapelmuster für die jeweiligen Reifen generiert und mit Hilfe einer Handhabungseinrichtung, insbesondere eines Roboters, umgesetzt. Ein aufwendiges Austesten von Stapelmustern ist hierbei nicht mehr erforderlich. Vielmehr ermittelt der eingesetzte Algorithmus automatisch das für die jeweiligen Reifen optimale Stapelmuster, mit dem die größte Anzahl von Reifen pro Volumen stabil gelagert werden kann. Hierbei berücksichtigt der Algorithmus selbstverständlich auch die Eigenschaften des Greifwerkzeugs der Handhabungseinrichtung, um ein automatisches Stapeln der Reifen mit diesem Stapelmuster zu ermöglichen. Durch diese robotergestützte Palettierung fällt die körperlich harte und monotone Arbeit des Stapelns weg, so dass die Gesundheit der Mitarbeiter geschont und auch Kosten eingespart werden. Darüber hinaus wird durch die Automatisierung eine gleich bleibende Qualität und Ausbringung gewährleistet.

Vorzugsweise wird bei der Berechnung der Stapelmuster und Generierung der Bewegungsbahnen auch eine Kollisionsprüfung auf Basis des digitalen Reifenmodells durchgeführt, um die spätere automatische Stapelung ohne Kollisionen und somit ohne weitere Eingriffe oder Korrekturen zu ermöglichen. Insbesondere fällt bei dem vorliegenden Verfahren das so genannte Teachen der Ablagekoordinaten weg, so dass erheblich Zeit eingespart wird. Dies stellt gerade bei der Einlagerung neuer Reifentypen einen großen Vorteil dar. Während beim Teachen die (geschätzten) Ablagepositionen manuell angefahren werden mussten, werden beim vorliegenden Verfahren die Ablagepositionen genau berechnet und automatisch aus dem berechneten Stapelmuster übernommen. Dieses automatische Berechnen der Positionen kann zudem zu besseren Stapelergebnissen führen, sowohl hinsichtlich der Anzahl an Reifen pro Palette als auch hinsichtlich der Qualität der Stapelung. Da durch den Algorithmus relativ gleichmäßige Muster erzeugt werden, verteilen sich Belastungen vor allem der unteren Reifenreihen besser, wodurch Verformungen der Reifen im Stapel minimiert werden.

In einer bevorzugten Ausgestaltung des vorliegenden Verfahrens wird als digitales Reifenmodell ein CAD-Reifenmodell für den Algorithmus bereitgestellt, durch das eine hohe Zuverlässigkeit des Verfahrens erreicht wird. Stehen keine CAD-Modelle zur Verfügung, so kann anstelle der manuellen Erstellung auch ein geeignetes Messverfahren eingesetzt werden, aus dessen Daten die CAD-Daten automatisch erzeugt werden. Ein Beispiel für ein derartiges Messverfahren ist eine optische Vermessung mit einem Laserscanner. Diese Vermessung eines Reifens spart Zeit und vermeidet Fehler, die bei manueller Eingabe der Daten bzw. Erzeugung der CAD-Modelle auftreten können. Dies gewährleistet somit ebenfalls ein hohes Maß an Qualität.

Bei der Berechnung des Stapelmusters variiert der eingesetzte Algorithmus vorgegebene oder vorgebbare Parameter des Stapelmusters innerhalb gewisser Grenzen (Suchbereiche). Die Parameter für die Berechnung des Stapelmusters können vom Benutzer vorgegeben werden. Dies betrifft insbesondere die Suchbereiche, innerhalb der der Algorithmus nach dem optimalen Stapelmuster sucht. Selbstverständlich können bestimmte Suchbereiche auch fest eingestellt sein. Weiterhin ist es von Vorteil, für unterschiedliche Reifenarten, beispielsweise Sommerreifen und Winterreifen, bereits feste Parametersätze mit zugehörigen Suchbereichen anzubieten, auf deren Basis der Algorithmus das optimale Stapelmuster berechnet.

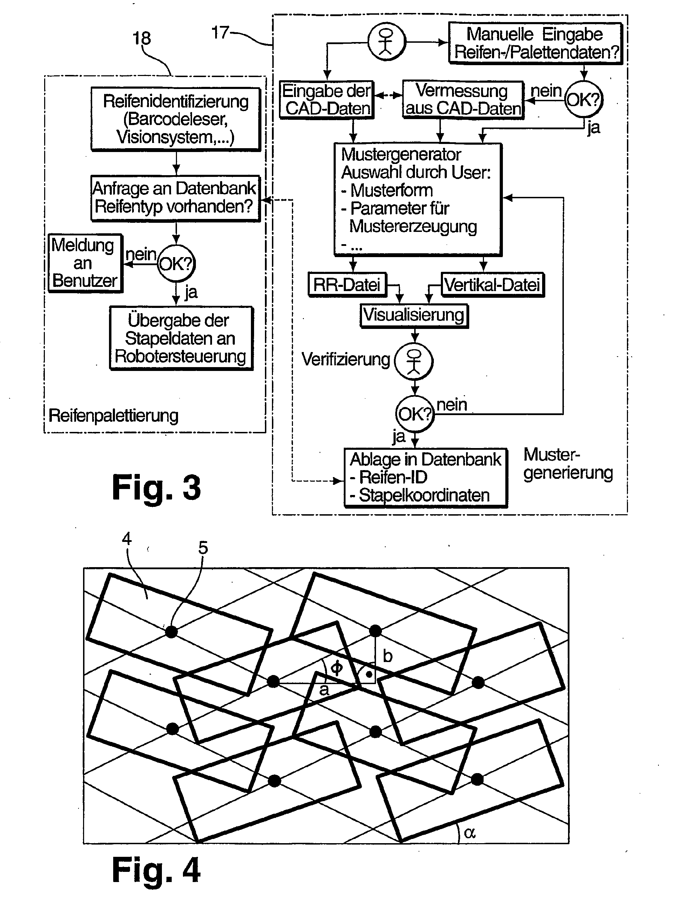

Bei der Berechnung eines Rick-Rack Musters stellen vor allem der Ablagewinkel der Reifen und ein im Folgenden als Rautenwinkel bezeichneter Winkel zu variierende Parameter dar. Bei dem Ablagewinkel handelt es sich um den Winkel zwischen der Horizontalen und der Hauptebene der Reifen. Der Rautenwinkel (vgl. Fig. 4) gibt den Winkel zwischen der Horizontalen und den durch die Mittelpunkte der Reifen aufgespannten Ebenen an. Diese Ebenen bilden im senkrechten Schnitt ein rautenförmiges Muster. Bei der Berechnung eines optimalen Rick-Rack Musters variiert der Algorithmus die Parameter vorzugsweise mit dem Ziel, das Muster mit der minimalen Rautenfläche oder der maximalen Reifenanzahl zu ermitteln.

Als weiterer Parameter kann auch die maximale Eindringung der einzelnen Reifen ineinander variiert werden. Diese Parameter stellen selbstverständlich keine abschließende Aufzählung dar. Vielmehr lassen sich bei Bedarf auch noch weitere Parameter bei der Suche nach dem optimalen Stapelmuster variieren.

Für die Berechnung des vertikalen Musters stellt die Anordnung der Stangen, die zur Führung bzw. Ablage der gestapelten Reifen in den einzelnen Reifenreihen dienen, eine wichtige Größe dar. Hierbei können beispielsweise der Abstand der Stangen zu den Begrenzungen des Trägers, insbesondere zur Bodenfläche und den Seitenteilen, der gegenseitige Abstand der Stangen oder die Anzahl der übereinander angeordneten Stangenlagen als Parameter variiert oder durch den Algorithmus automatisch berechnet werden.

Vorzugsweise werden für die Handhabungseinrichtung unterschiedliche Greifwerkzeuge bereitgestellt, die die Handhabungseinrichtung in Abhängigkeit vom zu erzeugenden Stapelmuster aufnimmt. Im bevorzugten Fall sind dies zumindest ein Greifwerkzeug für die Stapelung der Reifen nach einem Rick-Rack Muster und zumindest ein Greifwerkzeug für die Stapelung nach einem vertikalen Muster.

In einer Ausgestaltung des vorliegenden Verfahrens wird für ein Rick-Rack Muster ein Greifwerkzeug zum Greifen der Reifen am Innenradius eingesetzt, das zumindest zwei feststehende Halteelemente und ein bewegliches, über einen Antrieb verschiebbares Halteelement an einer Grundplatte aufweist. An der Grundplatte ist unter einem Winkel, der größer als 0° und kleiner als 90° ist, eine Flanschplatte zur Ankopplung der Handhabungseinrichtung angebracht. Die Anbringung der Flanschplatte kann im Winkel verstellbar ausgebildet sein.

Das Greifwerkzeug für die Stapelung der Reifen nach dem vertikalen Stapelmuster ist vorzugsweise so ausgestaltet, dass es die Reifen am Außenradius, d.h. an der Lauffläche, greift, und zusätzlich Greifer zur Aufnahme der Stangen für die vertikale Stapelung aufweist. Auf diese Weise muss das Greifwerkzeug bei der Stapelung der Reifen nicht gewechselt werden, um die Stangen geeignet anzubringen. Vorzugsweise umfasst das Greifwerkzeug eine feststehende, gewinkelte Greifbacke zur Zentrierung des Reifens und eine dieser gegenüberliegende, bewegliche Greifbacke an einer Grundplatte. Die bewegliche Greifbacke ist über einen Antrieb linear verschiebbar, so dass die Reifen mit den Greifbacken kraftschlüssig aufgenommen werden können. Eine Flanschplatte zur Ankopplung der Handhabungseinrichtung ist vorzugsweise derart außermittig an der Grundplatte angebracht, dass ein Ablegen der Reifen an Seitenteilen des Trägers ohne Kollision des Arms der Handhabungseinrichtung mit den Seitenteilen ermöglicht wird.

Vorzugsweise wird der Träger beim Stapeln des vertikalen Stapelmusters derart gekippt, dass die bereits gestapelten Reifen nicht umkippen. Dies kann auch automatisiert mit einer geeigneten Kippeinrichtung erfolgen, die neben oder unterhalb des Trägers angeordnet wird.

Die Vorrichtung zur Durchführung des vorliegenden Verfahrens umfasst zumindest eine Handhabungseinrichtung, ein oder mehrere von der Handhabungseinrichtung aufnehmbare Greifwerkzeuge für die Reifen, eine Datenverarbeitungseinheit sowie eine Übergabeeinheit. Die Datenverarbeitungseinheit umfasst zumindest ein Berechnungsmodul, das auf Basis von Geometriedaten der Reifen und/oder eines digitalen Reifenmodells der Reifen und einer vorgebbaren Größe des Trägers ein Rick-Rack Muster und/oder ein vertikales Muster, bei dem die Reifen auf ihren Laufflächen nebeneinander stehen, als Stapelmuster für die Reifen berechnet, das eine stabile Lagerung einer möglichst großen Anzahl der Reifen auf dem Träger ermöglicht. Das Berechnungsmodul übernimmt Positionsdaten der Reifen aus dem berechneten Stapelmuster, generiert zugehörige Bewegungsbahnen der Handhabungseinrichtung für die Stapelung der Reifen gemäß dem Stapelmuster und speichert die Positionsdaten und Bewegungsbahnen als Steuerdaten ab. Die Übergabeeinheit ruft bei Bedarf die Steuerdaten für die Stapelung der Reifen von der Datenverarbeitungseinheit oder einem Speichermedium mit den Steuerdaten ab und übergibt die Daten an die Steuerung der Handhabungseinrichtung, die die Handhabungseinrichtung entsprechend der Positionsdaten und zugehörigen Bewegungsbahnen zur Aufnahme der Reifen an einer vorgegebenen Aufnahmeposition und Ablage der Reifen auf dem Träger an. Als Handhabungseinrichtung wird hierbei ein Roboter mit zumindest vier Achsen für das Rick-Rack Stapelmuster oder zumindest fünf Achsen für das vertikale Stapelmuster, vorzugsweise ein vertikaler Knickarm-Roboter mit sechs Freiheitsgraden, eingesetzt.

Die Datenverarbeitungseinrichtung umfasst vorzugsweise eine geeignete Benutzerschnittstelle, über die ein Benutzer Parameter für die Berechnung des Stapelmusters eingeben kann. Weiterhin ist die Datenverarbeitungseinheit vorzugsweise so ausgebildet, dass sie dem Benutzer ein berechnetes Stapelmuster anzeigt, das dieser annehmen oder ablehnen kann. Nur bei einer bestätigenden Annahme des Stapelmusters werden die entsprechenden Steuerdaten aus dem Stapelmuster erzeugt und abgespeichert.

Bei einer Ausgestaltung der Vorrichtung zur Erzeugung unterschiedlicher Stapelmustertypen ist die Übergabeeinheit vorzugsweise so ausgestaltet, dass sie der Steuerung der Handhabungseinrichtung in Abhängigkeit vom zu erzeugenden Stapelmuster Daten übergibt, durch die die Handhabungseinrichtung das für dieses Stapelmuster vorgesehene Greifwerkzeug aufnimmt. Die bevorzugte Ausgestaltung der Greifwerkzeuge, für die auch unabhängig von der Vorrichtung Schutz beansprucht wird, wurde bereits in Zusammenhang mit der Beschreibung des Verfahrens erläutert.

### Kurze Beschreibung der Zeichnungen

Das vorliegende Verfahren sowie die zugehörige Vorrichtung werden nachfolgend anhand von Ausführungsbeispielen in Verbindung mit den Zeichnungen ohne Beschränkung des durch die Patentansprüche festgelegten Schutzbereichs nochmals näher erläutert. Hierbei zeigen:
- Fig. 1: ein Beispiel für ein Rick-Rack Stapelmuster;
- Fig. 2: ein Beispiel für ein vertikales Stapelmuster;
- Fig. 3: ein Beispiel für den Verfahrensablauf des vorliegenden Verfahrens in schematischer Darstellung;
- Fig. 4: eine Veranschaulichung der Winkel innerhalb des Rick-Rack Stapelmusters;
- Fig. 5: ein Beispiel für ein Greifwerkzeug für das Rick-Rack Stapelmuster;
- Fig. 6: ein Beispiel für ein Greifwerkzeug für das vertikale Stapelmuster;
- Fig. 7: ein Beispiel für die Palettenneigung; und
- Fig. 8: ein Beispiel für eine Reifenzentrierung.

### Wege zur Ausführung der Erfindung

Im folgenden Ausführungsbeispiel werden das Verfahren sowie die Vorrichtung für die Stapelung von Reifen nach dem Rick-Rack Stapelmuster und dem vertikalen Stapelmuster in einer Palette eingesetzt. Ein Beispiel für den Verfahrensablauf zeigt Figur 3 in schematischer Darstellung, in der auch die Datenverarbeitungseinheit 17 und die Übergabeeinheit 18 der vorliegenden Vorrichtung angedeutet sind.

Der Benutzer gibt hierbei zur Erzeugung der Stapelmuster zunächst bestimmte Daten der Reifen und der Palette vor. Darüber hinaus wird ein CAD-Modell des entsprechenden Reifentyps eingelesen. Ein derartiges digitales Reifenmodell ist erforderlich, falls der eingesetzte Algorithmus mit Hilfe einer Kollisionsdetektion die Setzplätze für die Reifen ermittelt. Das Stapelmuster wird dabei unter der Randbedingung generiert, dass beim Stapeln keine Kollisionen der Reifen und des Greifwerkzeugs mit anderen Reifen oder Seitenteilen der Palette auftreten.

Die Eingabe der Reifen- und Palettendaten kann durch direkte Eingabe der Parameter in der Datenverarbeitungseinheit 17 erfolgen. Auch eine automatische Vermessung des CAD-Modells zur Bestimmung dieser Daten ist möglich.

Werden die Daten von Hand eingegeben, so sind als Reifenparameter im vorliegenden Beispiel zumindest der Außendurchmesser, der Innendurchmesser, die Reifenbreite sowie die Felgenmaulbreite erforderlich.

Werden die CAD-Daten eingelesen, so kann die eingesetzte Software eigenständig nach einem iterativen Verfahren den Reifen bzw. die Palette vermessen und die benötigten Daten auf diese Weise ermitteln. Zusätzlich kann ein CAD-Modell des entsprechend eingesetzten Greifwerkzeugs eingegeben werden, um den Benutzer bei einer anschließenden Visualisierung der berechneten Stapelmuster einen realistischen Eindruck der Reifen- und Greiferbewegung beim Ablegen zu vermitteln. Dieser Vorgang kann dem Benutzer als animierte Darstellung angezeigt werden.

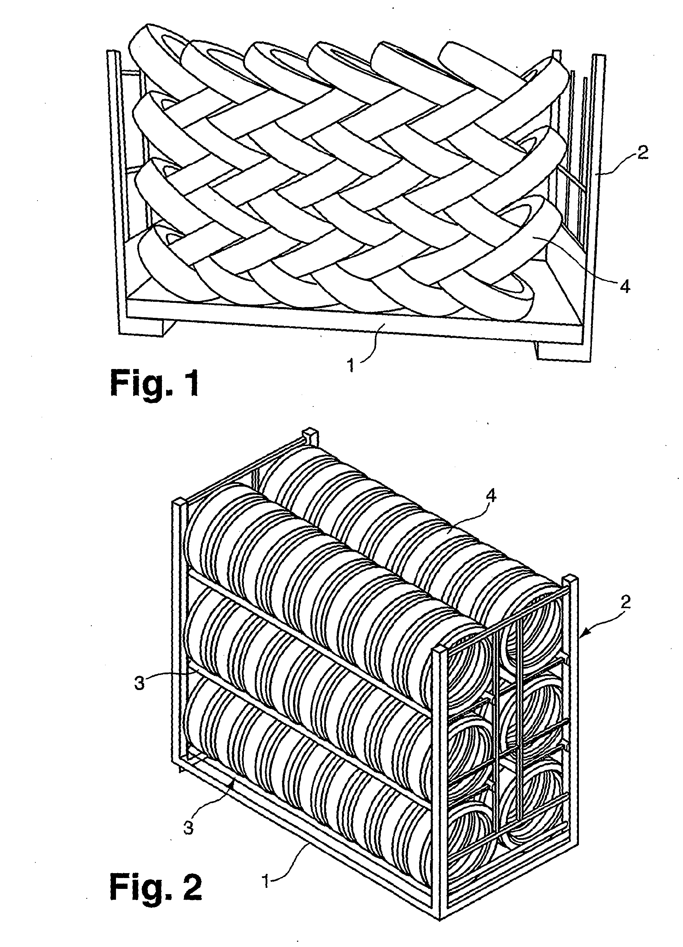

Die Art des zu erzeugenden Musters kann vorgegeben sein oder auch durch den Benutzer gewählt werden. Hierzu wird eine entsprechende Eingabemöglichkeit zur Verfügung gestellt. Abhängig von dem gewählten Muster können dann noch weitere Eingaben durch den Benutzer erfolgen, die in den nachstehenden Absätzen näher beschrieben sind. Figur 1 zeigt ein Beispiel für ein Rick-Rack Stapelmuster, wie es mit dem vorliegenden Verfahren erzeugt werden kann. Die Figur zeigt die gestapelten Reifen 4 auf einer Palette 1. Der Raum zwischen den Seitenteilen 2 der Palette 1 ist hierbei optimal ausgenutzt. Für die Erzeugung des Rick-Rack Stapelmusters können folgende Parameter eingestellt werden:
- ein Suchbereich für den Reifenablagewinkel α, innerhalb dessen der Algorithmus nach Mustern suchen soll;
- die Auflösung des Suchbereichs;
- die maximale Eindringung, mit der die Reifen ineinander gestaucht werden sollen;
- ein Höhenausgleich, um den jede erzeugte Lage von Reifen nach unten korrigiert wird (beispielsweise abhängig von der Weichheit der Gummimischung);
- ein Suchbereich für den Rautenwinkel φ;
- ein Breitenausgleich der Palette.

Die beiden angeführten Winkel, der Reifenablagewinkel α sowie der Rautenwinkel φ, sind in der schematischen Darstellung der Figur 4 veranschaulicht. Der Reifenablagewinkel α stellt hierbei den Winkel zwischen der Hauptebene des Reifens 4 und der Horizontalen dar. Der Rautenwinkel φ entspricht dem Winkel zwischen der Horizontalen und den durch die Mittelpunkte 5 der Reifen 4 aufgespannten Ebenen. Der Algorithmus variiert hierbei die Parameter innerhalb der vorgegebenen Suchbereiche derart, dass die Reifenanzahl innerhalb der Palette maximiert oder dass die Fläche der in Figur 4 sichtbaren Rauten minimiert wird. Das Ergebnis stellt dann ein Stapelmuster dar, bei dem der zur Verfügung stehende Raum optimal ausgenutzt wird. Der Breitenausgleich der Palette stellt das Maß dar, um das die Palette zum Berechnen des Musters an den Seiten vergrößert wird. Dadurch können auch die Zwischenräume in den Seitenteilen 2 der Palette 1 für die Reifen genutzt werden.

Es ist auch möglich, die Weichheit der Reifen über eine Deformationsmessung zu erhalten. Dabei wird der Reifen auf den Seitenflächen liegend flächig mit einer definierten Kraft beaufschlagt. Die Verformung kann dabei durch eine Druckplatte (Reifen liegt still) oder im Durchlauf mittels einer Druckwalze erzeugt werden. Die dabei auftretende Eindringung bzw. Verformung des Reifens wird gemessen und als Parameter bei der Berechnung des Stapelmusters entsprechend berücksichtigt. Hierdurch kann die Abweichung zwischen dem berechneten Palettiermuster bzw. Stapelmuster und dem sich real einstellenden Palettiermuster minimiert werden.

Beim Stapeln der Reifen in vertikaler Anordnung müssen zusätzlich Stangen 3 in die Palette 1 eingesetzt werden, auf denen die Reifen abgelegt werden. Dies ist in Figur 2 dargestellt. Jede Reifenreihe steht hierbei auf einem Paar derartiger Stangen 3. Zur Erzeugung der vertikalen Stapelmuster können daher folgende Parameter vorgegeben werden:
- Abstand der vorderen, unteren Stange vom Boden und der Vorderseite der Palette;
- Abstand aller weiteren Stangen relativ zur vorderen, unteren Stange;
- Anzahl der Stangenlagen (übereinander angeordnete Reifenreihen); und
- Stangenradius, falls Stangen mit unterschiedlichen Radien zur Verfügung stehen.

Für die Vorgabe dieser Parameter bestehen unterschiedliche Möglichkeiten. Zum einen kann der Benutzer sämtliche dieser Parameter selbst wählen und eingeben. Auch eine feste Voreinstellung eines Teils dieser Parameter ohne Eingriffsmöglichkeit durch den Benutzer ist möglich. Weiterhin ist es denkbar, dass die Eingabe aller oder einiger dieser Parameter entfällt, indem für verschiedene Reifenklassen bzw. Reifentypen bestimmte Parametersätze vorgegeben werden, die dann für die Berechnung der Muster herangezogen werden. Dies vereinfacht das Verfahren für den Benutzer erheblich und setzt kein Expertenwissen voraus. Es müssen dann lediglich die mindestens erforderlichen Reifendaten von Hand eingegeben oder das CAD-Modell vermessen und das entsprechende Muster ausgewählt werden.

Nach Beendigung aller Eingaben kann der Berechnungsprozess angestoßen werden, so dass der Algorithmus mit der Suche nach geeigneten Stapelmustern unter Berücksichtigung der vorgegebenen Parameter beginnt. Der Algorithmus berechnet hierbei auf Basis des digitalen Reifenmodells für jede Parameterkombination ein Stapelmuster, um das Stapelmuster mit der größten Anzahl von kollisionsfrei mit dem Roboter stapelbaren Reifen zu ermitteln. Dabei werden dem Benutzer im vorliegenden Beispiel der Prozessfortschritt, der momentane Status und das jeweils beste bisher gefundene Stapelmuster angezeigt. Die generierten Muster werden in entsprechenden Dateien abgelegt und können bei Bedarf visualisiert werden, wie aus Figur 3 ersichtlich ist. Der Benutzer kann somit unmittelbar das Muster ansehen und beurteilen.

Wurde ein optimales Muster generiert und durch den Benutzer verifiziert, so werden aus dem Muster die Positionsdaten der Reifen übernommen, zugehörige Bewegungsbahnen generiert und die entsprechende Datei in einer Datenbank abgelegt und mit einer reifenspezifischen ID versehen. Die Dateien beinhalten dabei die Positionskoordinaten für die einzelnen Reifen und die Punkte für die Roboterbahn. Die Erzeugung der Muster läuft also Offline in der Datenverarbeitungseinheit 17 ab.

Um nun die Reifen nach dem geforderten Muster in die Paletten abzulegen, muss zunächst der zu stapelnde Reifen durch die Übergabeeinheit 18 identifiziert werden. Die Erkennung des Reifentyps kann mit entsprechenden Geräten, beispielsweise einem Barcodeleser, erfolgen. Anschließend wird die Datenbank nach dem identifizierten Reifentyp durchsucht. Falls der Reifen noch nicht in der Datenbank abgelegt ist, wird eine Meldung ausgegeben. Ansonsten werden die entsprechenden Daten von der Übergabeeinheit 18 an die Robotersteuerung ausgegeben. Der Roboter kann nun den jeweiligen Greifer auswählen und mit der Palettierung beginnen (vgl. Figur 3).

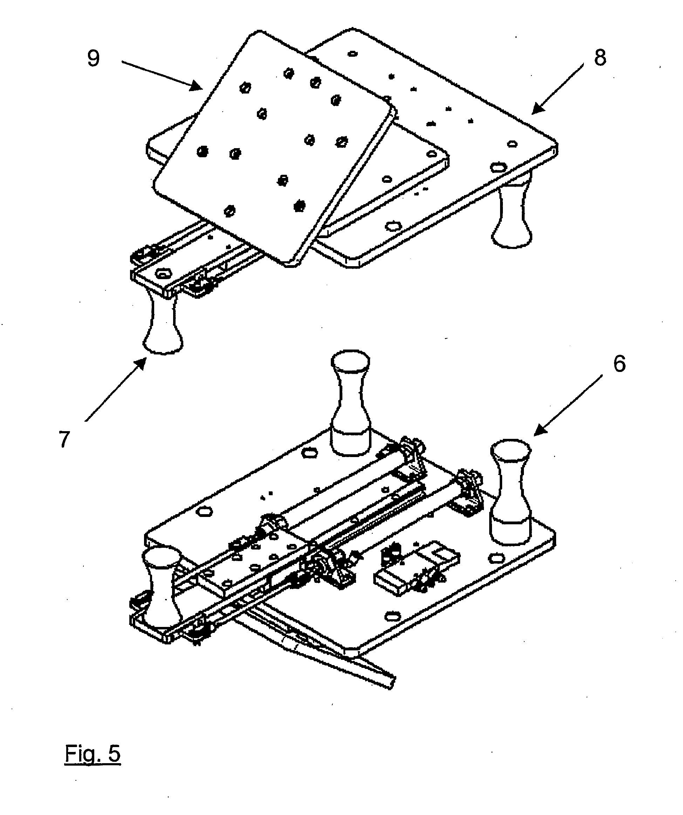

Figur 5 zeigt ein Beispiel für eine mögliche Ausgestaltung eines Greifwerkzeugs, im Folgenden auch als Greifer bezeichnet, zur Erzeugung eines Rick-Rack Stapelmusters. Die Reifen werden mit diesem Greifwerkzeug am Innenradius gegriffen. Hierzu hat das Greifwerkzeug zwei feststehende Halteelemente 6 sowie ein bewegliches Halteelement 7, das beispielsweise pneumatisch angetrieben ist. Die Halteelemente 6, 7 sind vorzugsweise konkav ausgeprägt, um ein sicheres Greifen der Reifen zu ermöglichen. Die Roboterflanschplatte 9 ist winklig zur Greifergrundplatte 8 befestigt, um die Schrägstellung der Reifen, bedingt durch das Rick-Rack Muster im Wesentlichen auszugleichen und die Handachse des Roboters in möglichst senkrechter Orientierung zu halten. Somit können Kollisionen des Roboters mit bereits abgelegten Reifen oder der Palette bereits hierdurch weitgehend vermieden werden.

Das Greifen der Reifen erfolgt, indem der Roboter den Greifer so positioniert, dass die feststehenden Halteelemente 6 mit der engsten Stelle ihrer konkaven Ausprägung den Innenradius des Reifens berühren. Danach wird der Reifen mit dem beweglichen Halteelement 7 gespannt und somit gehalten. Um nach dem Ablegen der Reifen in der Palette zu vermeiden, dass der Reifen mit dem Wulst an den Halteelementen 6, 7 hängen bleibt, können diese einklappbar ausgeführt werden. Die Halteelemente schwenken dabei nach innen weg. Dieser Greifer kann auch so ausgeprägt sein, dass die beiden Reifenstapel, die sich auf einer Palette befinden, gleichzeitig erzeugt werden können.

Aufgrund der Greiferkonstruktion verändert sich die Position des Reifenmittelpunkts relativ zum Greifer in Abhängigkeit vom Innenradius und der Felgenmaulbreite. Die Stapelpositionen der Reifen, die durch den Algorithmus generiert werden, sind allerdings auf einen Punkt am Reifen, beispielsweise den Reifenmittelpunkt, bezogen. Da der Roboter nur anhand eines vorgegebenen Punktes am Greifer denselben und somit den Reifen bewegen kann, muss von diesem Punkt über eine mathematische Transformation zum eigentlichen Reifenpunkt (z.B. Reifenmittelpunkt) zurückgerechnet werden. Dies ist Voraussetzung für das korrekte Ablegen der Reifen. Als Parameter dienen dabei der Innenradius und die Felgenmaulbreite der Reifen. Diese Berechnung läuft im Hintergrund des Programms zur Mustergenerierung ab und muss nicht durch den Benutzer durchgeführt werden.

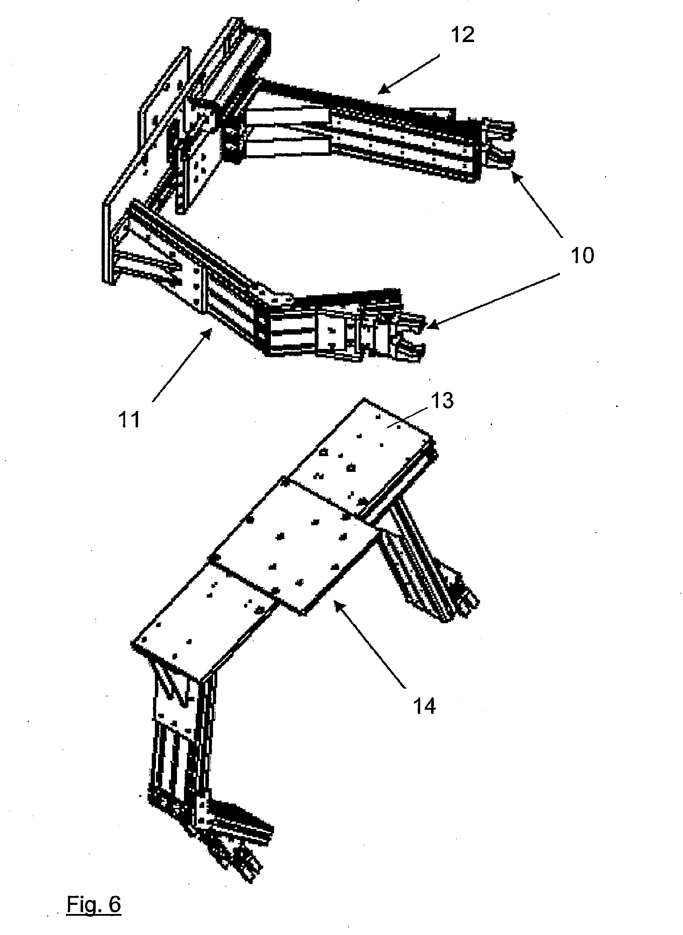

Figur 6 zeigt ein Beispiel für einen Greifer zur Erzeugung des vertikalen Stapelmusters. Für die Stapelung der Reifen gemäß dem vertikalen Stapelmuster müssen Stangen in die Palette eingesetzt werden, auf denen die Reifen abgestellt werden (vgl. Figur 2). Um einen Greiferwechsel hierbei zu vermeiden, ist der Greifer für die Stangen im vorliegenden Beispiel in den das Greifwerkzeug für die Reifen integriert.

Das Greifwerkzeug besteht hierbei aus einer feststehenden Greifbacke 11, die winklig ausgeprägt ist, und einer linear beweglichen Greifbacke 12 zum kraftschlüssigen Halten des Reifens. Beide Greifbacken sind an der Grundplatte 13 befestigt. Der winklige Aufbau der fixen Greifbacke 11 zentriert den Reifen und garantiert darüber hinaus einen gewissen Formschluss. Um die Reifen an den Randbereichen der Palette kollisionsfrei ablegen zu können, ist die Flanschplatte 14 zur Grundplatte 13 außermittig platziert. Durch Drehen des Greifers kann somit die Handachse des Roboters so positioniert werden, dass sich diese immer innerhalb der Palette befindet und nicht mit den Seitenteilen der Palette kollidiert. Das Greifwerkzeug kann dabei so ausgeprägt sein, dass auch mehrere Reifen gleichzeitig gegriffen und abgelegt werden können.

Die errechneten Reifenkoordinaten (Positionsdaten) beziehen sich auf eine bestimmte Position der Palette. Um Ungenauigkeiten bei der Ablage der Reifen so gering wie möglich zu halten, müssen die Paletten jeweils ausgerichtet werden. Dies kann durch eine passive Ausrichtung über mechanische Anschläge und/oder Zentrierdorne oder durch eine aktive Zentrierung mit Hilfe externer Aggregate erfolgen, die beispielsweise elektrisch, pneumatisch oder hydraulisch angetrieben sein können.

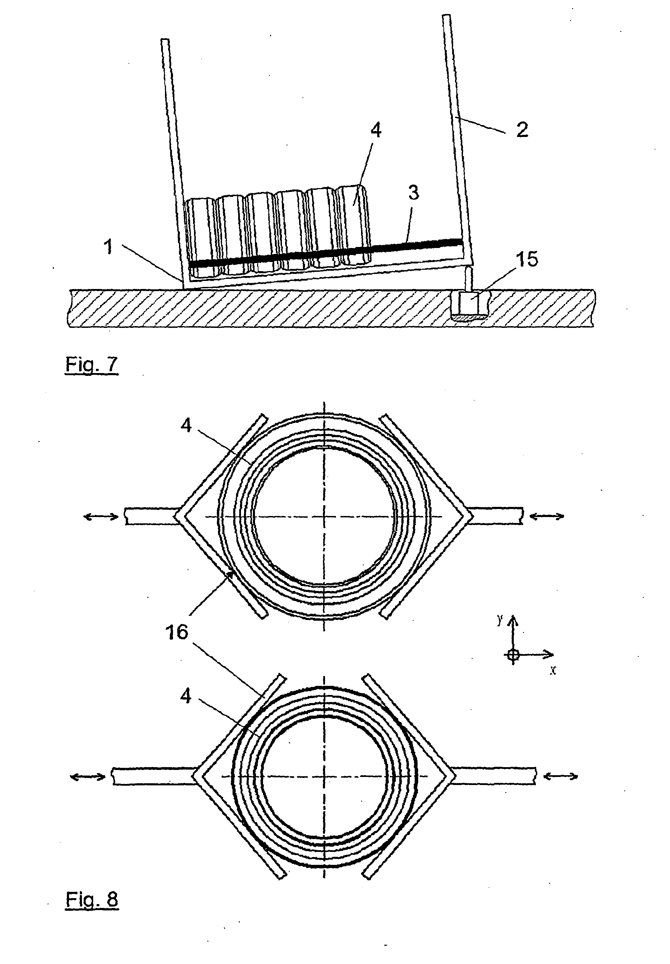

Speziell im Falle des vertikalen Stapelns von Reifen ist es notwendig, die Palette zu neigen, wie in Figur 7 dargestellt. Damit wird die Gefahr des Kippens der Reifen vermieden, da durch die Neigung eine Vorzugsrichtung vorgegeben wird. Der Antrieb der dargestellten Kippeinrichtung 15 kann elektrischer, pneumatischer oder hydraulischer Art sein.

Weiterhin müssen zum Einlegen der für das vertikale Stapeln benötigten Stangen die Seitenteile 2 der Palette 1 möglichst parallel, idealerweise senkrecht zum Palettenboden orientiert sein. Aufgrund der Konstruktion können hier Positionstoleranzen von mehreren Grad auftreten, was für ein automatisiertes Einlegen der Stangen nicht akzeptabel ist. Daher kann eine Einrichtung zum Ausrichten der Seitenwände vorgesehen sein, die ebenfalls wiederum elektrisch, pneumatisch oder hydraulisch angetrieben sein kann.

Die Reifen müssen in eine definierte Position gebracht werden, damit sie der Roboter mit Hilfe des entsprechenden Greifers aufnehmen kann. Dies erfolgt vorzugsweise mit Hilfe einer Zentriereinrichtung, wie sie in Figur 8 beispielhaft dargestellt ist. Vorzugsweise ist diese Zentriereinrichtung so ausgeprägt, dass die Reifenmittelpunkte durch die Zentrierung jeweils in der x-y-Ebene deckungsgleich sind. Dies kann passiv durch verstellbare Anschläge oder aktiv durch den dargestellten Zentriermechanismus erfolgen, der elektrisch, pneumatisch oder hydraulisch angetrieben sein kann. Vorzugsweise sind die Anlageflächen der Zentrierbacken 16 der Zentriereinrichtung mit Rollen ausgestattet, so dass die Reibung zwischen Reifen und Zentrierbacken minimiert wird. Die obere Teilabbildung der Figur 8 zeigt hierbei die Zentrierung eines großen, die untere Teilabbildung die Zentrierung eines kleinen Reifens 4.

### Bezugszeichenliste

- 1: Palette
- 2: Seitenteile der Palette
- 3: Stangen
- 4: Reifen
- 5: Mittelpunkte der Reifen
- 6: feststehende Halteelemente
- 7: bewegliches Halteelement
- 8: Grundplatte
- 9: Roboterflanschplatte
- 10: Greifer für Stangen
- 11: feststehende Greifbacke
- 12: bewegliche Greifbacke
- 13: Grundplatte
- 14: Roboterflanschplatte
- 15: Kippeinrichtung
- 16: Zentrierbacken
- 17: Datenverarbeitungseinheit
- 18: Übergabeeinheit

## Patentansprüche

1. Verfahren zum automatisierten Stapeln von Reifen (4) auf einem Träger (1), bei dem
- Geometriedaten der Reifen (4) bereitgestellt werden und/oder ein digitales Reifenmodell der Reifen (4) bereitgestellt oder erzeugt wird,
- ein Algorithmus auf Basis der Geometriedaten und/oder des Reifenmodells und einer vorgebbaren Größe des Trägers (1) ein Rick-Rack Muster und/oder ein vertikales Muster, bei dem die Reifen auf ihren Laufflächen nebeneinander stehen, als Stapelmuster für die Reifen (4) auf dem Träger (1) berechnet, das eine stabile Lagerung einer möglichst großen Anzahl der Reifen (4) auf dem Träger (1) ermöglicht,
- Positionsdaten der Reifen (4) aus dem Stapelmuster übernommen sowie zugehörige Bewegungsbahnen einer Handhabungseinrichtung für die Stapelung der Reifen (4) gemäß dem Stapelmuster generiert und abgespeichert werden,
- die gespeicherten Positionsdaten und zugehörigen Bewegungsbahnen für die Stapelung der Reifen (4) abgerufen und der Handhabungseinrichtung übergeben werden,
- die die Reifen (4) an einer vorgegebenen Aufnahmeposition aufnimmt und entsprechend der Positionsdaten und zugehörigen Bewegungsbahnen auf dem Träger (1) ablegt.

2. Verfahren nach Anspruch 1,
**dadurch gekennzeichnet,**
**dass** zunächst eine Berechnung von Stapelmustern für mehrere Reifen (4) unterschiedlicher Reifentypen erfolgt, für die die Positionsdaten sowie zugehörigen Bewegungsbahnen abgespeichert werden, wobei vor Beginn der Stapelung zunächst die zu stapelnden Reifen (4) identifiziert und anschließend die zu den identifizierten Reifen (4) gehörigen Positionsdaten und Bewegungsbahnen aufgerufen und der Handhabungseinrichtung übergeben werden.

3. Verfahren nach Anspruch 1 oder 2,
**dadurch gekennzeichnet,**
**dass** der Algorithmus bei der Berechnung des Stapelmusters und der Generierung der Bewegungsbahnen eine Kollisionsdetektion durchführt, um ein Stapelmuster für eine kollisionsfreie Stapelung zu liefern.

4. Verfahren nach einem der Ansprüche 1 bis 3,
**dadurch gekennzeichnet,**
**dass** das digitale Reifenmodell auf Basis zumindest eines Außendurchmessers, eines Innendurchmessers und einer Reifenbreite als Eingabeparameter automatisch generiert wird.

5. Verfahren nach einem der Ansprüche 1 bis 3,
**dadurch gekennzeichnet,**
**dass** für die Durchführung des Verfahrens benötigte Geometriedaten der Reifen (4), insbesondere Reifenbreite, Außendurchmesser, Innendurchmesser und/oder Felgenmaulbreite, aus dem digitalen Reifenmodell extrahiert werden.

6. Verfahren nach einem der Ansprüche 1 bis 5,
**dadurch gekennzeichnet,**
**dass** bei der Berechnung eines Rick-Rack Musters zumindest ein Ablagewinkel für die Reifen (4) und ein Winkel zwischen der Horizontalen und durch die Mittelpunkte der Reifen aufgespannten Ebenen als Parameter variiert werden.

7. Verfahren nach Anspruch 6,
**dadurch gekennzeichnet,**
**dass** bei der Berechnung des Rick-Rack Musters auch eine maximale gegenseitige Eindringung der Reifen (4) als Parameter variiert wird.

8. Verfahren nach einem der Ansprüche 1 bis 5,
**dadurch gekennzeichnet,**
**dass** bei der Berechnung eines vertikalen Musters eine Anordnung von Stangen (3) zur Stützung der Reifen (4) auf dem Träger (1) variiert wird.

9. Verfahren nach einem der Ansprüche 1 bis 8,
**dadurch gekennzeichnet,**
**dass** für unterschiedliche Reifentypen unterschiedliche Parametersätze vorgegeben und genutzt werden, in denen Variationsbereiche von Parametern bei der Berechnung des Stapelmusters festgelegt sind.

10. Verfahren nach einem der Ansprüche 1 bis 9,
**dadurch gekennzeichnet,**
**dass** die für die Stapelung der Reifen (4) auf den Träger (1) jeweils genutzten Positionsdaten und zugehörigen Bewegungsbahnen zu einem späteren Zeitpunkt wieder genutzt werden, um den Träger (1) automatisiert zu entladen.

11. Vorrichtung zum automatisierten Stapeln von Reifen (4) auf einem Träger (1), mit
- einer Handhabungseinrichtung und ein oder mehreren an die Handhabungseinrichtung ankoppelbaren Greifwerkzeugen zur Aufnahme und Ablage der Reifen (4), **gekennzeichnet durch**
- eine Datenverarbeitungseinheit (17) mit einem Berechnungsmodul, das auf Basis von Geometriedaten der Reifen (4) und/oder eines digitalen Reifenmodells der Reifen (4) und einer vorgebbaren Größe des Trägers (1) ein Rick-Rack Muster und/oder ein vertikales Muster, bei dem die Reifen auf ihren Laufflächen nebeneinander stehen, als Stapelmuster für die Reifen (4) berechnet, das eine stabile Lagerung einer möglichst großen Anzahl der Reifen (4) auf dem Träger (1) ermöglicht, und das Positionsdaten der Reifen (4) aus dem Stapelmuster übernimmt sowie zugehörige Bewegungsbahnen der Handhabungseinrichtung für die Stapelung der Reifen (4) gemäß dem Stapelmuster generiert und als Steuerdaten speichert, und
- eine Übergabeeinheit (18), die die Steuerdaten für die Stapelung der Reifen (4) abruft und an eine Steuerung der Handhabungseinrichtung übergibt, die die Handhabungseinrichtung entsprechend den Positionsdaten und zugehörigen Bewegungsbahnen zur Aufnahme der Reifen (4) an einer vorgegebenen Aufnahmeposition und Ablage der Reifen (4) auf dem Träger (1) ansteuert.

12. Vorrichtung nach Anspruch 11,
**dadurch gekennzeichnet,**
**dass** die Übergabeeinheit (18) so ausgebildet ist, dass sie der Steuerung der Handhabungseinrichtung in Abhängigkeit vom zu erzeugenden Stapelmuster Daten übergibt, durch die die Handhabungseinrichtung zur Aufnahme eines auf dieses Stapelmuster abgestimmten Greifwerkzeugs angesteuert wird.

13. Vorrichtung nach Anspruch 11 oder 12,
**dadurch gekennzeichnet,**
**dass** zumindest ein erstes der Greifwerkzeuge zum Greifen der Reifen (4) am Innenradius ausgebildet ist, wobei das erste Greifwerkzeug zumindest zwei feststehende Halteelemente (6) und ein bewegliches, über einen Antrieb verschiebbares Halteelement (7) an einer Grundplatte (8) aufweist, wobei an der Grundplatte (8) unter einem Winkel, der größer 0° und kleiner 90° ist, eine Flanschplatte (9) zur Ankopplung der Handhabungseinrichtung angebracht ist.

14. Vorrichtung nach Anspruch 13,
**dadurch gekennzeichnet,**
**dass** der Winkel verstellbar ist, unter dem die Flanschplatte (9) an der Grundplatte (8) angeordnet ist.

15. Vorrichtung nach einem der Ansprüche 11 bis 14,
**dadurch gekennzeichnet,**
**dass** zumindest ein zweites der Greifwerkzeuge zum Greifen der Reifen (4) am Außenradius ausgebildet ist und zusätzlich Greifer (10) zur Aufnahme von Stangen (3) aufweist.

16. Vorrichtung nach Anspruch 15,
**dadurch gekennzeichnet,**
**dass** das zweite Greifwerkzeug eine feststehende, gewinkelte Greifbacke (11) zur Zentrierung des Reifens (4) und eine bewegliche, über einen Antrieb linear verschiebbare Greifbacke (12) an einer Grundplatte (13) aufweist, mit denen die Reifen (4) kraftschlüssig aufgenommen werden können.

17. Vorrichtung nach Anspruch 16,
**dadurch gekennzeichnet,**
**dass** an der Grundplatte (13) außermittig eine Flanschplatte (14) zur Ankopplung der Handhabungseinrichtung angebracht ist.

18. Vorrichtung nach einem der Ansprüche 11 bis 17,
**dadurch gekennzeichnet,**
**dass** eine Kippvorrichtung (15) für den Träger (1) vorgesehen ist, mit der der Träger (1) bei der Erzeugung eines vertikalen Stapelmusters geneigt werden kann, um ein Umkippen der Reifen (4) auf dem Träger (1) zu verhindern.

## Claims

1. A method for automatically stacking tires (4) on a support (1), in which
- geometrical data of the tires (4) are provided and/or a digital tire model of the tires (4) is provided or generated,
- based on the geometrical data and/or the tire model and a predefinable size of the support (1), an algorithm calculates a rick-rack pattern and/or a vertical pattern in which the tires stand next to one another on their treads, as a stacking pattern for the tires (4) on the support (1), said stacking pattern making it possible to store a largest possible number of tires (4) in a stable manner on the support (1),
- positional data of the tires (4) are adopted from the stacking pattern and associated trajectories of a handling device for stacking the tires (4) are generated and stored according to the stacking pattern,
- the stored positional data and the associated trajectories for stacking the tires (4) are retrieved and transferred to the handling device,
- which receives the tires (4) at a given receiving position and puts the same on the support (1) in accordance with the positional data and associated trajectories.

2. The method according to claim 1,
**characterized in**
**that** firstly stacking patterns are calculated for a plurality of tires (4) of different tire types for which the positional data as well as associated trajectories are stored, wherein before the beginning of stacking, the tires (4) to be stacked are initially identified and then the positional data and trajectories pertaining to the identified tires (4) are retrieved and transferred to the handling device.

3. The method according to claim 1 or 2,
**characterized in**
**that** when calculating the stacking pattern and generating the trajectories, the algorithm executes a collision detection in order to provide a stacking pattern for a collision-free stacking.

4. The method according to any one of claims 1 to 3,
**characterized in**
**that** the digital tire model is automatically generated on the basis of at least one outside diameter, one inside diameter and a tire width as input parameters.

5. The method according to any one of claims 1 to 3,
**characterized in**
**that** the geometrical data of the tires (4) required for carrying out the method, in particular tire width, outside diameter, inside diameter and/or rim width are extracted from the digital tire model.

6. The method according to any one of claims 1 to 5,
**characterized in**
**that** when calculating a rick-rack pattern, at least one placement angle for the tires (4) and an angle between the horizontal and planes spanned by the midpoints of the tires are varied as parameters.

7. The method according to claim 6,
**characterized in**
**that** when calculating the rick-rack pattern, also a maximum mutual penetration of the tires (4) is varied as a parameter.

8. The method according to any one of claims 1 to 5,
**characterized in**
**that** when calculating a vertical pattern, an arrangement of rods (3) for supporting the tires (4) on the support (1) is varied.

9. The method according to any one of claims 1 to 8,
**characterized in**
**that** for different types of tires different sets of parameters are predefined and used in which ranges of variation of parameters are specified when calculating the stacking pattern.

10. The method according to any one of claims 1 to 9,
**characterized in**
**that** the positional data and appropriate trajectories used in each case for stacking the tires (4) on the support (1) are used again at a later time point to automatically unload the support (1).

11. A device for automatically stacking tires (4) on a support (1), comprising
- a handling device and one or a plurality of gripping tools adapted for coupling to the handling device for receiving and setting down the tires (4),
**characterized by**
- a data processing unit (17) comprising a calculation module that, on the basis of geometrical data of the tire (4) and/or a digital tire model of the tire (4) and a predefined size of the support (1), calculates a rick-rack pattern and/or a vertical pattern in which the tires stand next to one another on their treads as a stacking pattern for the tires (4) that makes it possible to store a largest possible number of tires (4) on the support (1) in a stable manner and that adopts positional data of the tires (4) from the stacking pattern as well as generates associated trajectories of the handling device for the stacking of the tires (4) according to the stacking pattern and stores them as control data, and
- a transfer unit (18) which retrieves the control data for stacking the tires (4) and transfers it to a control of the handling device, which triggers the handling device according to the positional data and associated trajectories for receiving the tires (4) at a predefined receiving position and putting the tires (4) on the support (1).

12. The device according to claim 11,
**characterized in that** the transfer unit (18) is configured in such a manner that it transfers data to the controller of the handling device depending on the stacking pattern to be generated, by which means the handling device is triggered to receive a gripping tool matched to this stacking pattern.

13. The device according to claim 11 or 12,
**characterized in that**
at least a first of the gripping tools is configured for gripping the tires (4) at the inner radius, wherein the first gripping tool comprises at least two fixed retaining elements (6) and a movable retaining element (7) which can be displaced by means of a drive on a base plate (8), wherein a flanged plate (9) for coupling the handling device is attached to the base plate (8) at an angle greater than 0° and smaller than 90°.

14. The device according to claim 13,
**characterized in**
**that** the angle at which the flanged plate (9) is disposed on the base plate (8) is adjustable.

15. The device according to any one of claims 11 to 14,
**characterized in that** a second of the gripping tools is configured for gripping the tires (4) on the outer radius and additionally comprises grippers (10) for receiving rods (3).

16. The device according to claim 15,
**characterized in that** the second gripping tool comprises a fixed angled gripping jaw (11) for centering the tire (4) and a movable gripping jaw (12) which can be displaced linearly by means of a drive on a base plate (13) with which the tires (4) can be received non-positively.

17. The device according to claim 16,
**characterized in that** a flanged plate (14) for coupling the handling device is off-center on the base plate (13).

18. The device according to any one of claims 11 to 17,
**characterized in that** a tilting device (15) is provided for the support (1) with which the support (1) can be inclined when producing a vertical stacking pattern to prevent tipping of the tires (4) on the support (1).

## Revendications

1. Procédé d'empilage automatisé de pneus (4) sur un support (1), dans lequel
- des données de géométrie des pneus (4) sont fournies et/ou un modèle de pneu numérique des pneus (4) est fourni ou généré,
- un algorithme basé sur des données de géométrie et/ou sur le modèle de pneu et une grandeur prescrite du support (1) calcule un modèle en zig-zag et/ou un modèle vertical, dans lequel les pneus sont disposés côte à côté sur leurs surfaces de roulement, faisant office de modèle de pile des pneus (4) sur le support (1), lequel permet un positionnement stable d'un nombre le plus grand possible de pneus (4) sur le support (1),
- des données de position des pneus (4) sont extraites du modèle de pile et des voies de mouvement afférentes d'un dispositif de manipulation pour l'empilage des pneus (4) sont générées et mémorisées conformément au modèle de pile,
- les données de position mémorisées et les voies de mouvement afférentes sont appelées pour l'empilage des pneus (4) et transmises au dispositif de manipulation,
- celui-ci reçoit les pneus (4) à une position de réception prescrite et les dépose sur le support (1) de manière correspondante aux données de position et aux voies de mouvement correspondantes.

2. Procédé selon la revendication 1,
**caractérisé en ce que**
tout d'abord un calcul des modèles de piles pour plusieurs pneus (4) de types de pneus différents a lieu, pour lequel les données de position ainsi que les voies de mouvement afférentes sont mémorisées, moyennant quoi avant le début de l'empilage les pneus (4) à empiler sont tout d'abord identifiés et ensuite les données de position et les voies de mouvement afférents aux pneus (4) identifiés sont appelés et transmis au dispositif de manipulation.

3. Procédé selon la revendication 1 ou 2,
**caractérisé en ce que**
l'algorithme met en oeuvre lors du calcul du modèle de pile et de la génération des voies de mouvement une détection de collision, afin de livrer un modèle de pile permettant un empilage exempt de collision.

4. Procédé selon une des revendications 1 à 3,
**caractérisé en ce que**
le modèle de pneu numérique est généré automatiquement sur la base d'au moins un diamètre extérieur, un diamètre intérieur et une largeur de pneu comme paramètres d'entrée.

5. Procédé selon une des revendications 1 à 3,
**caractérisé en ce que**
les données de géométrie des pneus (4) requises pour la mise en oeuvre du procédé, notamment la largeur de pneu, le diamètre extérieur, le diamètre intérieur et/ou la largeur de mâchoire de jante, sont extraites du modèle de pneu numérique.

6. Procédé selon une des revendications 1 à 5,
**caractérisé en ce que**
lors du calcul d'un modèle en zig-zag, au moins un angle de dépôt des pneus (4) et un angle entre les horizontales et les plans tracés à travers les points centraux des pneus sont variés en tant que paramètres.

7. Procédé selon la revendication 6,
**caractérisé en ce que**
lors du calcul du modèle en zig-zag, une pénétration mutuelle maximale des pneus (4) est aussi variée en tant que paramètre.

8. Procédé selon une des revendications 1 à 5,
**caractérisé en ce que**
lors du calcul d'un modèle vertical, un agencement de tiges (3) pour soutenir les pneus (4) sur le support (1) est varié.

9. Procédé selon une des revendications 1 à 8,
**caractérisé en ce que**
des jeux de paramètres différents pour des types de pneus différents sont prescrits et utilisés, dans lesquels des plages de variation de paramètres sont déterminées lors du calcul du modèle de pile.

10. Procédé selon une des revendications 1 à 9,
**caractérisé en ce que**
les données de position respectivement utilisées pour l'empilage des pneus (4) sur le support (1) et les voies de mouvement afférentes sont à nouveau utilisées à un moment ultérieur, afin de décharger le support (1) de manière automatisée.

11. Dispositif d'empilage automatisé de pneus (4) sur un support (1), comportant :
- un dispositif de manipulation et un ou plusieurs outils de préhension pouvant être couplés au dispositif de manipulation afin de recevoir et déposer les pneus (4), **caractérisé par** :
- une unité de traitement de données (17) comportant un module de calcul, qui calcule sur la base de données de géométrie des pneus (4) et/ou d'un modèle de pneu numérique des pneus (4) et d'une grandeur prescrite du support (1) un modèle en zig-zag et/ou un modèle vertical, dans lequel les pneus sont disposés côté à côté sur leurs surfaces de roulement, faisant office de modèle de pile des pneus (4), qui permet un positionnement stable d'un nombre le plus grand possible de pneus (4) sur le support (1), et extrait du modèle de pile les données de position des pneus (4) et génère et mémorise comme données de commande les voies de position afférentes du dispositif de manipulation pour l'empilage des pneus (4) conformément au modèle de pile, et
- une unité de transmission (18), qui appelle les données de commande pour l'empilage des pneus (4) et les transmet à une unité de commande du dispositif de manipulation, qui pilote le dispositif de manipulation de manière correspondante aux données de position et aux voies de mouvement afférentes afin de recevoir les pneus (4) à une position de réception prescrite et de déposer les pneus (4) sur le support (1).

12. Dispositif selon la revendication 11,
**caractérisé en ce que**
l'unité de transmission (18) est conçue de telle sorte qu'elle transmet des données à la commande du dispositif de manipulation en fonction du modèle de pile à produire, au moyen desquelles le dispositif de manipulation est piloté afin de recevoir un outil de préhension accordé à ce modèle de pile.

13. Dispositif selon la revendication 11 ou 12,
**caractérisé en ce que**
au moins un premier des outils de préhension est conçu afin de saisir les pneus (4) sur le rayon interne, moyennant quoi le premier outil de préhension présente au moins deux éléments de retenue (6) fixes et un élément de retenue mobile (7), déplaçable par l'intermédiaire d'un entraînement sur une plaque de socle (8), moyennant quoi une plaque de bride (9) pour coupler le dispositif de manipulation est montée sur la plaque de socle (8) à un angle, qui est supérieur à 0° et inférieur à 90°.

14. Dispositif selon la revendication 13,
**caractérisé en ce que**
l'angle, auquel la plaque de bride (9) est disposée sur la plaque de socle (8), est réglable.

15. Dispositif selon une des revendications 11 à 14,
**caractérisé ce que**
au moins un deuxième des outils de préhension est conçu afin de saisir les pneus (4) sur le rayon externe et présente en outre une pince de préhension (10) pour recevoir des tiges (3).

16. Dispositif selon la revendication 15,
**caractérisé en ce que**
le deuxième outil de préhension présente une mâchoire de préhension (11) fixe, coudée pour le centrage du pneu (4) et une mâchoire de préhension (12) mobile, déplaçable linéairement par l'intermédiaire d'un dispositif d'entraînement, sur une plaque de socle (13), avec lesquelles les pneus (4) peuvent être reçus par conjonction de force.

17. Dispositif selon la revendication 16,
**caractérisé en ce que**
une plaque de bride (14) pour coupler le dispositif de manipulation est montée de manière décentrée sur la plaque de socle (13).

18. Dispositif selon une des revendications 11 à 17,
**caractérisé en ce que**
un dispositif de basculement (15) est prévu pour le support (1), avec lequel le support (1) peut être incliné lors de la production d'un modèle de pile vertical, afin d'empêcher un effondrement des pneus (4) sur le support (1).
